# EUROPEAN PATENT APPLICATION

(11) **EP 4 447 256 A1**
(43) Date of publication of application: **16.10.2024**
(21) Application number: 23204731.6
(22) Date of filing: 19.10.2023
(51) Int. Cl.: H02J 7/00

(54) **A METHOD FOR CHARGING ACCUMULATORS OF DEVICES OF A WIRED SECURITY SYSTEM, THE WIRED SECURITY SYSTEM AND A CONTROL UNIT OF THE WIRED SECURITY SYSTEM WHICH ARE CONFIGURED TO CHARGE THE ACCUMULATORS OF THE DEVICES ACCORDING TO THE METHOD**

(30) Priority: 14.04.2023 UA 202301691
(71) Applicant: Reznichenko, Anton, 04116 Kyiv (UA); Kupchenko, Bohdan, 04116 Kyiv (UA); Hodunok, Oleksii, 61004 Kharkiv (UA); Paveliev, Serhii, 61070 Kharkiv (UA); Dimitrov, Yurii, 64250 Kharkiv region Donets (UA); Uzhchenko, Artem, 61089 Kharkiv (UA); Kukuruza, Andrii, 08533 Dmytrivka (UA)
(72) Inventor: Reznichenko, Anton, 04116 Kyiv (UA); Kupchenko, Bohdan, 04116 Kyiv (UA); Hodunok, Oleksii, 61004 Kharkiv (UA); Paveliev, Serhii, 61070 Kharkiv (UA); Dimitrov, Yurii, 64250 Kharkiv region Donets (UA); Uzhchenko, Artem, 61089 Kharkiv (UA); Kukuruza, Andrii, 08533 Dmytrivka (UA)
(74) Representative: AOMB Polska Sp. z.o.o.

(57) **Abstract**

The invention relates to a wired security system comprising accumulator-powered devices and to a method for managing a charging process of the accumulators in the wired security system. The invention provides a method for charging accumulators of the devices of the wired security system comprising at least one bus, and the method comprises measuring a charge level of each of the accumulators which are connected to the wired security system. Also, the invention discloses a wired security system and a control unit of the wired security system which are configured to charge the accumulators of the devices according to the described method.

## Description

### FIELD OF THE INVENTION

The invention relates to a wired security system comprising accumulator (battery)-powered devices and to a method for managing a charging process of the accumulators in the wired security system.

### BACKGROUND OF THE INVENTION

Usually, the wired security system comprises a group of devices which lack autonomous power supply elements and require continuous power supply by direct current via a bus of the wired security system and a group of devices which comprise rechargeable power supply elements (accumulators) and require their periodical charging by direct current via the bus of the wired security system. Said devices may be wired sensors such as an opening sensor, a motion sensor, a glass breakage sensor, a fire sensor and other known sensors, an alarm, a keyboard, an emergency button and other devices which are required for operation of the wired security system. The term "bus" or "bus of the wired security system" means a cable having several leads for supplying power to wired devices of the system by the direct current from a main or an additional power supply unit and to transmit data from and to the devices. The term "accumulator" or "battery" means a reusable (rechargeable) direct current source preferably of a chemical type for accumulating electrical energy and autonomous supplying electrical power to the electro-technical devices of the wired system. This electrical current source is characterized by the accumulator's capacity and charge level.

The wired security systems have a problem that is associated with charging the power supply elements of the devices, if there are several such devices on a single bus. For example, the devices of the wired security system comprise an accumulator-powered alarm. The alarm is a device that consumes a high amount of the accumulator charge in a short time and is discharged quicker than other devices of the system. The alarm is powered by an embedded accumulator, since the bus cannot provide transmission of the current being necessary for its operation even within a short time period. It is required to charge the accumulator of the alarm after each case of its actuation. When charging such a power-consuming device as the alarm, most of the current that is transmitted via the bus from the power supply unit is used. If several alarm-like devices are connected on a single bus and if the current required for their simultaneous charging is transmitted via the bus, then an unacceptable drop (decrease) of the voltage will occur in connection places of the devices and it will result in violating parameters of power supply for all other devices which are powered by the direct current from the power supply unit to provide a full operation of the wired security system. That is, during charging of the alarm accumulators, rest of the devices in the system (wired sensors etc.) do not receive any current that is required to provide their continuous operation in view of the voltage drop caused by transmission of the high current via the bus that is required to charge the alarm accumulator. Therefore, a problem of the known wired systems, including the wired security systems, is a lack of optimization of the charging process of the accumulators which results in that each accumulator-powered device in the system consumes as much power as it needs and at any time of the system operation, thereby resulting in that the rest of the devices of the system do not receive power being necessary for their operation. This problem may be resolved by increasing the power of the power supply unit and by using leads having a greater cross section in the bus. This option is not acceptable not only in view of increase of dimensions of the power supply unit and power consumption, but also in view of the fact that if the existing wired security systems are upgraded or extended, it will be technically impossible to replace the bus.

### PRIOR ART

The following methods for managing a charge of accumulators of devices in wired systems with direct current power supply lines are known.

A system and a method for managing power supply of peripheral devices to automate a building are known from the application US2018150121A1 published on May 31, 2018. The known system comprises a system controller that is configured to supply power to one or more peripheral devices. The system controller comprises a USB hub having a plurality of independently-powerable USB ports, and a primary controller configured to remove power from any one from the plurality of the USB ports which the peripheral device is not connected to in response to determination that a combined current consumption of the one or more peripheral devices exceeds a predetermined threshold. The primary controller may be further configured to supply power to each of the plurality of the USB ports in response to determination that the current consumption of the one or more peripheral devices does not exceed a predetermined threshold.

A system and a method for supplying power to electrical devices via a universal serial bus (USB) are known from the application WO2022177548A1 published on August 25, 2022. The known system comprises a power source, a plurality of power converters and power source outputs, a plurality of charging USB ports which are configured to connect an electronic device thereto and to provide an output voltage for charging the device, and a controller that includes a memory unit to store instructions for executing a power supply method as well as a processor to execute these instructions. The known method comprises transmitting information about a series of different output voltages, receiving information about the output voltage via the plurality of charging USB ports and managing the power supply to supply power to electronic devices. The method also comprises determining a charging priority among several devices by means of the controller by measuring a charge level of a first device and of a second device followed by charging the device having a lower charge level with a greater voltage level than the device having a greater charge level. During charging of the devices, a change of the voltage level is selected from the series of different output voltages as predetermined for each of the devices.

The above-described systems resolve problems which are associated with recharging of the accumulators of the devices in the direct current power supply systems by creating a more powerful power supply unit and a more reliable tool for distributing and managing the power of the power supply unit, thereby providing a method for electrical power distribution according to different power distribution criteria. However, a drawback of the known methods for managing the recharging process of the accumulators of the devices in the wired systems, in particular, in the wired security systems, is resolving the problem by using the more powerful power supply unit and the more reliable and powerful tool for distributing and managing the power of the power supply unit. This solution of the problem significantly complicates and increases a price of the wired system as well as poses restrictions for deployment of the wired system on a large area due to increased requirements as to the tool for distributing and managing the power of the power supply unit (electro-technical bus) and as to wired lines that connect the power supply unit to the devices. In particular, for the example mentioned in the section "BACKGROUND OF THE INVENTION", at the step of designing and mounting the wired security system, it is required to plan a maximum energy consumption with a reserve which is excessive in practice. That is, if the wired security system comprises several alarm-like devices, then, during mounting the system, it will be required to plan an energy consumption considering that all the alarms will be charged simultaneously which would be excessive and would require to use a more powerful power supply unit and wired lines to connect it to the devices. Besides, even use of the more powerful power supply unit and the wired lines would not allow to completely avoid the voltage drop problem at all the devices of the wired system. Particularly, it is applicable to the wired security system, where the accumulator-powered devices are actuated simultaneously quite often which eventually requires simultaneous recharge of the accumulators of several devices on the single bus. The voltage drop in the devices of the wired security system makes it inoperable for a certain period of time, thereby deteriorating its operation reliability.

### SUMMARY OF THE INVENTION

An objective underlying the invention is to increase an operation reliability of a wired security system by avoiding any voltage decrease on a bus of the wired security system below a permissible value during simultaneous charging of accumulators of several devices and to decrease power and dimensions of a power supply unit and, thus, to decrease power consumption.

The objective is achieved by the inventive method for charging accumulators of devices in a wired security system, the system comprising at least one bus with accumulator-powered devices and bus-powered devices connected to the bus. The inventive method comprises steps of measuring a charge level of each of the accumulators, establishing, if the charge of at least one of the accumulators is decreased, a charging queue for the accumulators starting from an accumulator having the lowest charge level to an accumulator having the greatest charge level, charging a first accumulator in the queue by a maximum charging current up to a charge level of an accumulator that is the closest one in the charging queue from a series of predetermined charge levels or charging by the maximum current during a predetermined charging time, then charging a next accumulator in the queue by the maximum charging current up to the charge level of the accumulator from the series of predetermined charge levels or charging by the maximum current during the predetermined charging time, and repeating the charging of the accumulators from the queue until a full charge level of all the accumulators is reached, and the accumulator that is first in the queue is next after the accumulator that is last in the queue. The above-mentioned maximum amount of the charging current for each of the accumulators is determined by (i) supplying the current of different amount alternately to each of the accumulator-powered devices, (ii) simultaneous measuring the voltage for each of the current amount at each of the devices of the wired security system, and (iii) subsequent determining the greatest current amount for charging the accumulators that corresponds to a permissible voltage drop amount on the bus of the wired security system.

According to one of preferable embodiments of the method, the charge level of the accumulators is also measured during charging of the accumulators.

According to another preferable embodiment of the method, the first accumulator and each next accumulator in the queue are charged by the maximum charging current up to the charge level that is selected from the series of predetermined charge levels, but that is not less than the charge level of the next accumulator in the queue.

According to another preferable embodiment of the method, the maximum charging current for each of the accumulators is determined by supplying currents of three different amounts alternately to each of the devices of the system and by measuring a maximum permissible voltage drop on all the devices.

The objective is also achieved by providing a wired security system that implements the inventive method for charging accumulators. The provided wired security system comprises at least one bus with at least two accumulator-powered devices connected to the bus and at least one bus-powered device connected to the bus, at least one power supply unit that is connected, by means of the bus, to the bus-powered devices and to the accumulators of the accumulator-powered devices, and a control unit that is connected to said devices and to the power supply unit. Therewith, the bus is configured to provide signal exchange between the control unit and the devices connected to the bus. The control unit comprises at least one microcontroller that is programmed to: save data including a maximum amount of a charging current for each of the accumulators and a series of charge levels of the accumulators and/or charging time of the accumulators, receive a measurement data of the charge level of the accumulators and establish a charging queue for the accumulators, if the charge of at least one of the accumulators is decreased, starting from an accumulator having the lowest charge level to an accumulator having the greatest charge level, followed by alternate transmitting, via the bus, a signal about charging to one accumulator from the established charging queue, to the charge level of an accumulator that is the closest one in the charging queue from a series of predetermined charge levels or during a predetermined charging time.

According to one of preferable embodiments of the system, the microcontroller is programmed to receive the measurement data of the charge level of the accumulators also during the charging of the accumulators.

According to another preferable embodiment of the system, the microcontroller is programmed to alternately transmit, via the bus, a signal about charging to one accumulator from the established charging queue, to the charge level of the accumulator that is the closest one in the charging queue from the series of predetermined charge levels, but that is not less than the charge level of the next accumulator in the queue.

According to another preferable embodiment of the system, the microcontroller is programmed to determine the maximum amount of the charging current for each of the accumulators by supplying currents of different amounts to each of the accumulator-equipped devices, connected to the bus, while at the same time measuring the voltage for each of the amounts of the current at each of the devices followed by determining the greatest amount of the current for charging the accumulators that corresponds to a permissible voltage drop amount on the bus.

According to another preferable embodiment of the system, the microcontroller is programmed to determine the maximum amount of the charging current for each of the accumulators by supplying currents of three different amounts and by measuring a maximum permissible voltage drop on all the devices.

The objective is also achieved by providing a control unit for the above-described wired security system that participates in implementation of the inventive method for charging accumulators. This control unit comprises a power supply unit and/or an input for connecting the power supply unit, an input for connecting at least one bus that is connected to at least two accumulator-powered devices and to at least one power supply unit-powered device, and a microcontroller that is electrically connected to the power supply unit and to the bus of the wired security system. And the microcontroller is programmed to: save data including a maximum amount of a charging current for each of the accumulators and a series of charge levels of the accumulators and/or charging time of the accumulators, receive a measurement data of the charge level of the accumulators and establish a charging queue for the accumulators, if the charge of at least one of the accumulators is decreased, starting from an accumulator having the lowest charge level to an accumulator having the greatest charge level, followed by alternate transmitting, via the bus, a signal about charging to one accumulator from the established charging queue, to the charge level of an accumulator that is the closest one in the charging queue from a series of predetermined charge levels or during a predetermined charging time.

According to one of preferable embodiments of the control unit, the microcontroller thereof is programmed to receive the measurement data of the charge level of the accumulators also during the charging of the accumulators.

According to another preferable embodiment of the control unit, the microcontroller thereof is programmed to alternately transmit, via the bus, a signal about charging to one accumulator from the established charging queue, to the charge level of the accumulator that is the closest one in the charging queue from the series of predetermined charge levels, but that is not less than the charge level of the next accumulator in the queue.

According to another preferable embodiment of the control unit, the microcontroller thereof is programmed to determine the maximum amount of the charging current for each of the accumulators by supplying currents of different amounts to each of the accumulator-equipped devices, connected to the bus, while at the same time measuring the voltage for each of the amounts of the current at each of the devices followed by determining the greatest amount of the current for charging the accumulators that corresponds to a permissible voltage drop amount on the bus.

According to another preferable embodiment of the control unit, the microcontroller thereof is programmed to determine the maximum amount of the charging current for each of the accumulators by supplying currents of three different amounts and by measuring a maximum permissible voltage drop on all the devices.

The above-described method and the system with the control unit, wherein the present method is implemented, optimize the charging process of the accumulators of the devices of the wired security system in order to utilize the bus bandwidth as much as possible. For example, if the bus has the permissible current of 200 mA and the accumulator-powered device consumes 200 mA during charging, then this current will be sufficient to provide a reliable operation of the entire system, since the accumulator of only a single device is charged at a certain time with the maximum charging current as previously determined specifically for this device. Therewith, according to the method, the whole charging order, i.e., the charging queue and level, is determined. This enables to charge the accumulators of several devices alternately without any risk that other devices of the system may stop operating during the charging period of the accumulators due to the high voltage drop on the bus that is caused by high charging current for powering the accumulators.

### BRIEF DESCRIPTION OF THE DRAWINGS

The invention is illustrated by exemplary embodiments of the wired security system and the control unit of this wired security system, as well as of the method for charging the accumulators of the devices in this wired security system. Said examples are illustrated with the following drawings:
- Fig. 1 illustrates a schematic diagram of the wired security system having one bus with two accumulator-powered devices arranged on the bus;
- Fig. 2 illustrates a schematic diagram of the wired security system having two buses with two accumulator-powered devices arranged on each of the buses;
- Fig. 3 illustrates a schematic diagram of the control unit of the wired security system illustrated in Fig. 1;
- Figs. 4A and 4B illustrate a schematic diagram of the operation of the wired security system during charging of the accumulators according to the invention.

Said examples and illustrations do not limit other possible embodiments of the invention, rather they merely explain its essence and confirm the possibility of implementation thereof.

### DETAILED DESCRIPTION OF THE EXEMPLARY EMBODIMENTS OF THE INVENTION

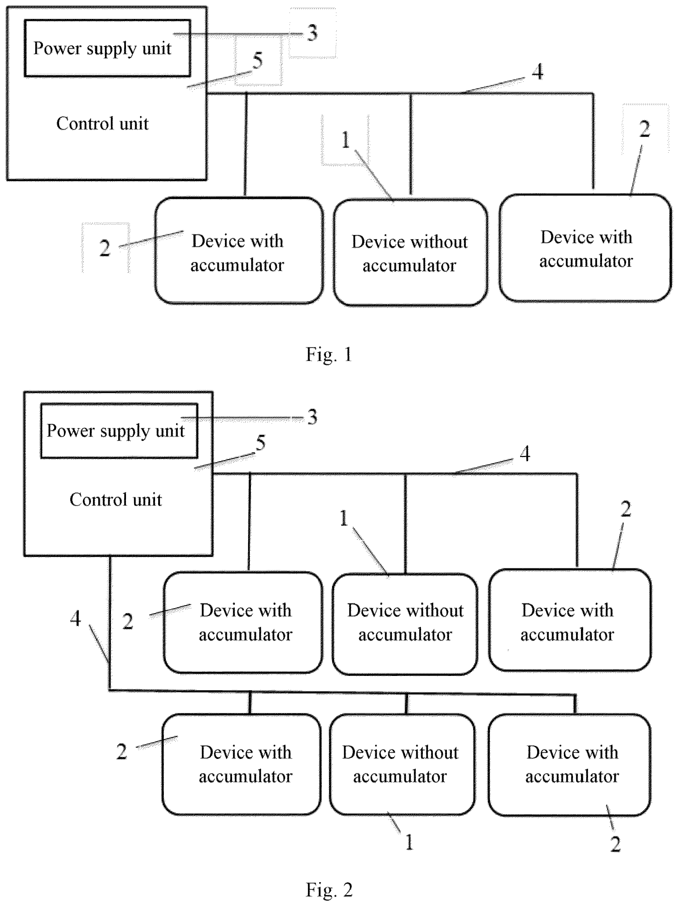

A wired security system which implements a method for charging accumulators, according to the invention, comprises devices (1) which are powered by a direct current from a power supply unit via a bus, devices (2) which are powered by accumulators, the power supply unit (3) that is connected to the DC-powered devices and to the accumulators by means of the bus (4), a control unit (5) that is connected to the above-mentioned devices (1), (2) and to the power supply unit (3). Fig. 1 illustrates an example of this wired security system having one bus (4) with two accumulator-powered devices (2) arranged on the bus. Fig. 2 illustrates an example of this wired security system having two buses (4) with two accumulator-powered devices (2) arranged on each of the buses. Figs. 1 and 2 illustrate an example of this wired security system, wherein the power supply unit (3) or several power supply units (3) is/are embedded into the control unit (5) which is an optimal embodiment of the system. However, it is possible that the power supply unit (3) or several power supply units (3) is/are arranged outside the control unit (5) and connected to the devices (1), (2) via the bus (4) and to the control unit (5) via its input for connecting the power supply unit. The DC-powered devices (1) which are powered by the power supply unit via the bus may be sensors of the wired security system, e.g., wired motion sensors, window and door opening wired sensors, glass breakage wired sensors, wired fire sensors, wired flood sensors etc. The accumulator-powered devices (2) may be photo- and video-recording sensors, wall-mounted keypads for arming and disarming the wired security system, wired external and internal alarms, electronic integration modules for integrating additional devices into the system, panic buttons and other similar equipment.

The control unit (5) is a main component of the wired security system, and the control unit may be made as a control panel or a central of the security system comprising a printed circuit board having a microcontroller, components of the power supply unit, connectors for connecting the bus and for mounting and setting tools all mounted on the printed circuit board, and the control unit receives and analyzes data received from the sensors followed by sending corresponding notifications to external devices or control signals to the corresponding devices of the system. Also, the control unit may not comprise components of the power supply unit, comprise a connector for connecting the power supply unit that is provided in a separate housing. The power supply unit with its components also may comprise a connector for connecting an additional power supply unit that may operate in parallel with the power supply unit provided on the circuit board of the control unit.

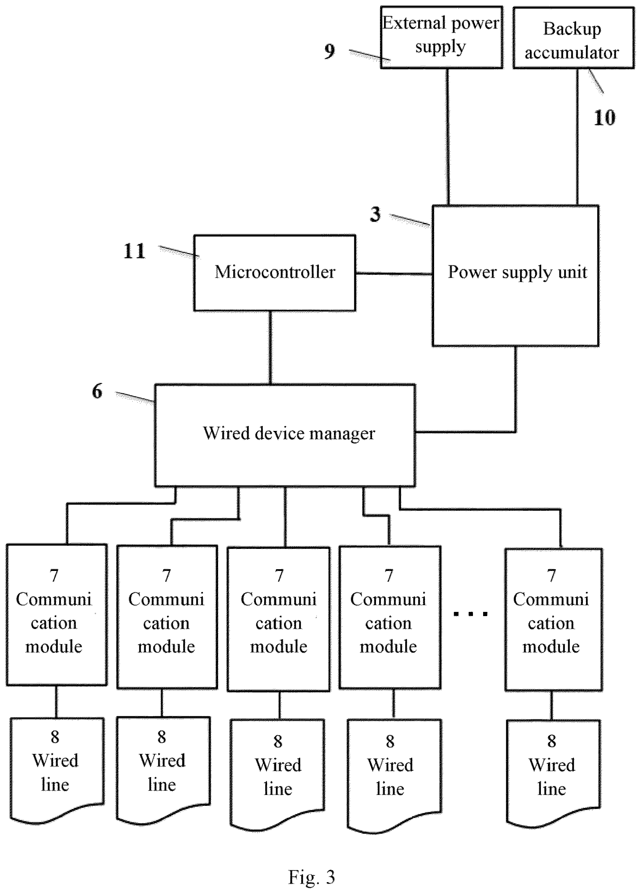

According to the example depicted in Fig. 3, the control unit (5) comprises the embedded power supply unit (3) that is equipped with an input for providing main power supply for the components of the wired security system by alternating current of 110-240 V Optionally, the power supply unit (3) may be external and connected to the control unit (5) via its input for connecting the power supply unit. The power supply unit (3) is connected to a wired devices manager (6) which a set of communication modules (7) is connected to. Each of the communication modules (7) forms an input for connecting the bus of the wired security system via a set of wired lines (8). The power supply unit (3) has an input for connecting an external power supply (9) and a backup accumulator (10) for powering the control unit (5) and its components in case a mains voltage is temporarily lost.

The control unit (5) further comprises a microcontroller (11) that is connected to the power supply unit (3) and to the bus of the wired security system via the wired devices manger (6). The microcontroller (11) may be a 32-bitARM-microcontroller having a storage device that is programmed to start a computer program that executes: (i) save data including a maximum amount of a charging current for each of the accumulators and a series of charge levels of the accumulators and/or charging time of the accumulators, (ii) receive a measurement data of the charge level of the accumulators and establish a charging queue for the accumulators, if the charge of at least one of the accumulators is decreased, starting from an accumulator having the lowest charge level to an accumulator having the greatest charge level, followed by alternate transmitting, via the bus, a signal about charging to one accumulator from the established charging queue, to the charge level of an accumulator that is the closest one in the charging queue from a series of predetermined charge levels or during a predetermined charging time.

Furthermore, the microcontroller (11) may be programmed to (iii) receive the measurement data of the charge level of the accumulators also during the charging of the accumulators, (iv) alternately transmit, via the bus, a signal about charging to one accumulator from the established charging queue, to the charge level of the accumulator that is the closest one in the charging queue from the series of predetermined charge levels, but that is not less than the charge level of the next accumulator in the queue, (v) determine the maximum amount of the charging current for each of the accumulators by supplying currents of different amounts to each of the accumulator-equipped devices, connected to the bus, while at the same time measuring the voltage for each of the amounts of the current at each of the devices followed by determining the greatest amount of the current for charging the accumulators that corresponds to the permissible voltage drop amount on the bus, (vi) determine the maximum amount of the charging current for each of the accumulators by supplying currents of three different amounts and by measuring the maximum permissible voltage drop on all the devices.

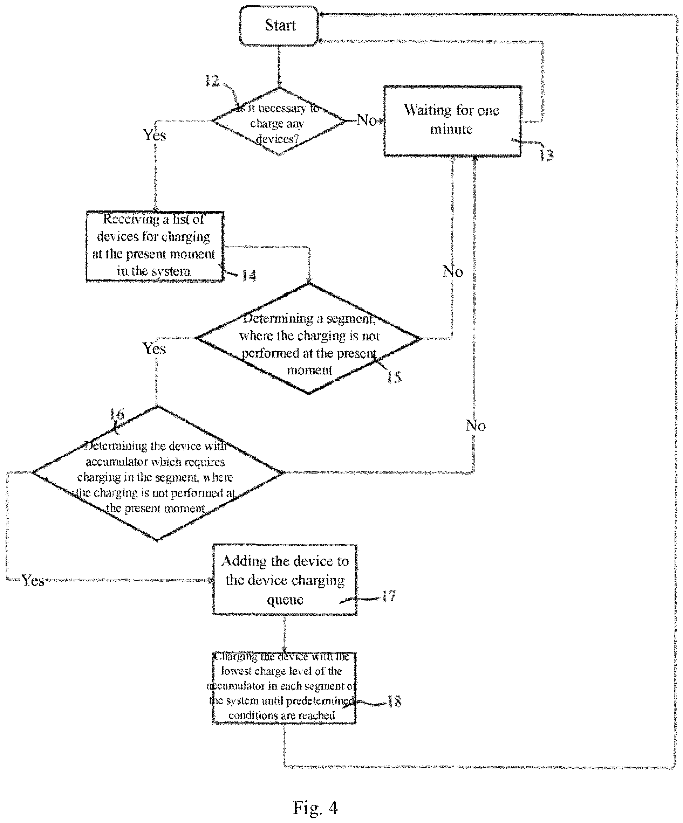

During operation of the above-described wired security system, the following charging algorithm is implemented by the above-described control unit for charging the accumulators of the system devices. Figs. 4A and 4B illustrate a schematic diagram that demonstrates the achievement of the claimed technical effect by the invention, namely, optimization of the charging of the accumulators of several devices of the system simultaneously. According to Figs. 4A and 4B, step (12) comprises determining whether there are accumulator-equipped devices (2) which require charging by measuring a charge level of each of the accumulators, e.g., by monitoring charge levels of the accumulators of the devices (2). The monitoring may be performed by periodical polling (step (13)) each of the devices (2) connected to the wired security system by means of the microcontroller (11) of the control unit (5). The polling time is predetermined and it may be changed via the control unit (5). The microcontroller (11) periodically receives data about the charge level of the accumulator of each of the devices (2), and the charge level of the accumulators is also measured during their charging process. Based on results of the periodical monitoring, a list of the devices (2) which accumulators are charging at the moment of the polling is formed (step (14)). Then, a segment of the wired security system, where there is no charging of the accumulators performed at the moment of the polling, is determined (step (15)). This segment may be a part of the system that comprises the accumulator-equipped devices, but they do not require charging at the present moment. For example, the system comprises two buses, and the accumulator-equipped device with the accumulator being charged is arranged on one of the buses, while the accumulator-equipped device with the fully charged accumulator is arranged on another bus. Step (16) comprises determining whether the accumulator-equipped device which already requires charging is present in the system segment, where the accumulators are not charged at the moment of the polling, and adding it to the queue of the devices which are charged at the present moment (step (17)). Owing to the steps (15) and (16), charging of the device accumulator is started within a certain system segment immediately during performing the next polling by the microcontroller (11), thereby further decreasing the charging time and optimizing the charging process of the accumulators of the entire system. Therefore, the charging queue of the accumulators is established starting from the accumulator having the lowest charge level to the accumulator having the greatest charge level. At step (18), the microcontroller (11) selects the predetermined maximum charging current for the accumulator of the specific device (2) and sends a signal about charging of the accumulator to this device (2). Therewith, the accumulator that is the first in the queue is charged by the maximum charging current until predetermined charging conditions are reached. These conditions may include either charging up to the charge level of the accumulator that is the closest one in the queue from the series of the predetermined charge levels or charging by the maximum current during the predetermined charging time. The microcontroller (11) comprises data about said conditions and starts the program for execution thereof. Then, each accumulator that is next in the queue is charged by the maximum charging current up to the charge level of the accumulator from the series of the predetermined charge levels (e.g., 10%, 30%, 50%, 70%) or it is charged by the maximum current during the predetermined charging time period (e.g., 10 hours). The accumulators from the queue are recharged until the full charge level of all the accumulators is reached (100% charge of the accumulator). During this cyclic charging, the accumulator that is first in the queue is next after the accumulator that is last in the queue. The preferable embodiment is to charge the first accumulator and each next accumulator in the queue by the maximum charging current up to the charge level that is selected from the series of predetermined charge levels, but that is not less than the charge level of the next accumulator in the queue.

The above-mentioned maximum amount of the charging current for each accumulator is determined before start of the charging, for example, during mounting or setting the wired security system. The maximum amount of the charging current is determined during a power supply test of the bus of the wired security system. In order to conduct the power supply test, the current of different amount is supplied alternately to each of the accumulator-equipped devices, while at the same time measuring the voltage for each amount of the current on each of the devices of the wired security system, including the DC-powered devices which are powered by the power supply unit via the bus and the accumulator-powered devices. The voltage is measured at the input of this device. According to the voltage measurement results, the maximum amount of the charging current is determined as the greatest amount of the current for charging the accumulators which corresponds to the permissible voltage drop amount on the bus of the wired security system. For example, the power supply test may comprise searching for the "worst" accumulator-powered device on the bus which loads the bus to the maximum extent during charging thereof. The "worst" device means the device that will consume the greatest amount of the current on the bus. Usually, it is an accumulator-equipped device that is the most distant from the control unit (5). In order to search for this device, a maximum consumption mode is enabled on all the devices on the line. Then, possible charging currents for each of the accumulator-powered devices are alternately sorted out and the maximum possible one is established which do not decrease the voltage on the bus of the wired security system lower than the predetermined voltage threshold. After the test is completed, the system has already determined the maximum amount of the charging current for the accumulator of each device (2) at which there will be no voltage drop on other devices lower than the threshold. If this test is not conducted, the charging current will be selected as a minimum possible current for the accumulator of each device.

The preferable embodiment of the power supply test is to determine the maximum charging current for each of the accumulators by supplying currents of three different amounts alternately to each of the devices and by measuring the maximum permissible voltage drop on all the devices. For example, the power supply test on the devices of the system may be implemented in such a way that upon receipt of a test start command from the control unit (5), the current of three different amounts is alternately supplied to each of the devices (2). During this, the device (2) measures the voltage at the input and determines its minimum values. After the test is completed, each of the devices (2) provides the control unit (5) with information about the voltage drop on the wired line (8) during charging at each of the three different amounts of the current.

Therefore, the invention increases the operation reliability of the wired security system by utilizing the available power of the power supply unit of the system as much as possible in order to charge all the accumulators, while at the same time providing reliable and uninterrupted power supply to all the devices on the bus of the wired security system, decreases the power of the power supply unit, dimensions of the device and overall power consumption of the security system.

## Claims

1. A method for charging accumulators of devices in a wired security system, the system comprising at least one bus with accumulator-powered devices and bus-powered devices connected to the bus, the method comprising:
- measuring a charge level of each of the accumulators;
- establishing, if the charge of at least one of the accumulators is decreased, a charging queue for the accumulators starting from an accumulator having the lowest charge level to an accumulator having the greatest charge level;
- charging a first accumulator in the queue by a maximum charging current up to a charge level of an accumulator that is a closest one in the charging queue from a series of predetermined charge levels or charging by the maximum current during a predetermined charging time;
- then charging a next accumulator in the queue by the maximum charging current up to the charge level of the accumulator from the series of predetermined charge levels or charging by the maximum current during the predetermined charging time; and
- repeating the charging of the accumulators from the queue until a full charge level of all the accumulators is reached, and the accumulator that is first in the queue is next after the accumulator that is last in the queue;
- wherein the maximum amount of the charging current for each of the accumulators is determined before the charging start by supplying the current of different amount alternately to each of the accumulator-powered devices, while simultaneously measuring the voltage for each of the current amount at each of the devices of the wired security system, and subsequently determining the maximum current amount for charging the accumulators that corresponds to a permissible voltage drop amount on the bus of the wired security system.

2. The method according to claim 1, wherein the charge level of the accumulators is also measured during charging of the accumulators.

3. The method according to claim 1, wherein the first accumulator and each next accumulator in the queue are charged by the maximum charging current up to the charge level that is selected from the series of predetermined charge levels, but that is not less than the charge level of the next accumulator in the queue.

4. The method according to claim 1, wherein the maximum charging current for each of the accumulators is determined by supplying currents of three different amounts alternately to each of the devices of the system and by measuring a maximum permissible voltage drop on all the devices.

5. A wired security system comprising:
- at least one bus with at least two accumulator-powered devices connected to the bus and at least one bus-powered device connected to the bus;
- at least one power supply unit that is connected, by means of the bus, to the bus-powered devices and to the accumulators of the accumulator-powered devices; and
- a control unit that is connected to said devices and to the power supply unit,
- wherein the bus is configured to provide signal exchange between the control unit and said devices,
- and the control unit comprises at least one microcontroller that is programmed to:
- save data including a maximum amount of a charging current for each of the accumulators and a series of charge levels of the accumulators and/or charging time of the accumulators, and
- receive measurement data of the charge level of the accumulators and establish a charging queue for the accumulators, if the charge of at least one of the accumulators is decreased, starting from an accumulator having a lowest charge level to an accumulator having a greatest charge level, followed by alternate transmitting, via the bus, a signal about charging to one accumulator from the established charging queue, to the charge level of the accumulator that is a closest one in the charging queue from a series of predetermined charge levels or during a predetermined charging time.

6. The wired security system according to claim 5, wherein the microcontroller is programmed to receive the measurement data of the charge level of the accumulators also during the charging of the accumulators.

7. The wired security system according to claim 5, wherein the microcontroller is programmed to alternately transmit, via the bus, a signal about charging to one accumulator from the established charging queue, to the charge level of the accumulator that is the closest one in the charging queue from the series of predetermined charge levels, but that is not less than the charge level of the next accumulator in the queue.

8. The wired security system according to claim 5, wherein the microcontroller is programmed to determine the maximum amount of the charging current for each of the accumulators by supplying currents of different amounts to each of the accumulator-equipped devices, connected to the bus, while at the same time measuring a voltage for each of the amounts of the current at each of the devices followed by determining a greatest amount of the current for charging the accumulators that corresponds to a permissible voltage drop amount on the bus.

9. The wired security system according to claim 8, wherein the microcontroller is programmed to determine the maximum amount of the charging current for each of the accumulators by supplying currents of three different amounts and by measuring a maximum permissible voltage drop on all the devices.

10. A control unit of a wired security system, the control unit comprising:
a power supply unit and/or an input for connecting the power supply unit; an input for connecting at least one bus that is connected to at least two accumulator-powered devices and to at least one power supply unit-powered device; and a microcontroller that is electrically connected to the power supply unit and to the bus of the wired security system, wherein the microcontroller is programmed to:
- save data including a maximum amount of a charging current for each of the accumulators and a series of charge levels of the accumulators and/or charging time of the accumulators, and
- receive measurement data of the charge level of the accumulators and establish a charging queue for the accumulators, if the charge of at least one of the accumulators is decreased, starting from an accumulator having a lowest charge level to an accumulator having a greatest charge level, followed by alternate transmitting, via the bus, a signal about charging to one accumulator from the established charging queue, to the charge level of the accumulator that is a closest one in the charging queue from a series of predetermined charge levels or during a predetermined charging time.

11. The control unit of the wired security system according to claim 10, wherein the microcontroller is programmed to receive the measurement data of the charge level of the accumulators also during the charging of the accumulators.

12. The control unit of the wired security system according to claim 10, wherein the microcontroller is programmed to alternately transmit, via the bus, a signal about charging to one accumulator from the established charging queue, to the charge level of the accumulator that is the closest one in the charging queue from the series of predetermined charge levels, but that is not less than the charge level of the next accumulator in the queue.

13. The control unit of the wired security system according to claim 10, wherein the microcontroller is programmed to determine the maximum amount of the charging current for each of the accumulators by supplying currents of different amounts to each of the accumulator-equipped devices, connected to the bus, while at the same time measuring a voltage for each of the amounts of the current at each of the devices followed by determining a greatest amount of the current for charging the accumulators that corresponds to a permissible voltage drop amount on the bus.

14. The control unit of the wired security system according to claim 10, wherein the microcontroller is programmed to determine the maximum amount of the charging current for each of the accumulators by supplying currents of three different amounts and by measuring a maximum permissible voltage drop on all the devices.
